# EUROPEAN PATENT SPECIFICATION

(11) **EP 3 781 428 B1**
(45) Date of publication and mention of the grant of the patent: **31.12.2025**
(21) Application number: 19721145.1
(22) Date of filing: 16.04.2019
(51) Int. Cl.: B60L 1/00, H02K 16/00, H02P 25/02

(54) **HYBRID TYPE PROPULSION APPARATUS, MOTORCYCLE AND REGULATION METHOD OF A PROPULSION APPARATUS**
HYBRIDANTRIEBSVORRICHTUNG, MOTORRAD UND REGELVERFAHREN FÜR EINE ANTRIEBSVORRICHTUNG
APPAREIL DE PROPULSION DU TYPE HYBRIDE, MOTOCYCLETTE ET PROCÉDÉ DE RÉGULATION D'UN APPAREIL DE PROPULSION

(30) Priority: 17.04.2018 IT 201800004590
(43) Date of publication of application: 24.02.2021
(73) Proprietor: PIAGGIO & C. S.p.A., 56025 Pontedera (Pisa) (IT)
(72) Inventor: CAPPELLINI, Antonio, 56025 Pontedera, PISA (IT); NESTI, Paolo, 56025 Pontedera, PISA (IT); CARMIGNANI, Luca, 56025 Pontedera, PISA (IT)
(74) Representative: Mitola, Marco
(86) International application number: PCT/IB2019/053130
(87) International publication number: WO 2019/202502

(56) References cited:
- EP-A1- 2 578 438
- EP-A1- 2 585 694
- EP-B1- 2 585 694
- WO-A1-2010/082893
- DE-A1- 102011 084 092
- US-B1- 8 461 710

## Description

### SCOPE

The present invention concerns a hybrid type of propulsion apparatus comprising an internal combustion engine and a reversible type electric machine, a motorcycle and the regulation method of said propulsion apparatus.

### STATE OF THE ART

As is well known, there is an increasing need to improve the performance of internal combustion engines, while at the same time limiting consumption and increasing their efficiency. To this end, it is well known to equip the engines with supercharging systems, so as to be able to increase performance while reducing the overall displacement of the engine. Examples of the prior art are shown in US 8,461,710 B1, WO 2010/082893, EP 2585694 A1, EP2578438 A1, and DE 102011 084092 A1.

The current supercharging systems, with particular reference to turbochargers, do not guarantee optimal performance, especially in terms of turbo lag. Such delays may be significantly reduced by using complex systems for controlling the geometry of the impeller and the related distributor which significantly increase costs and the power management strategy of the engine. In any event, such systems for controlling the geometry of the impeller and the distributor are not suitable for operating on single-cylinder engine architectures because the flow pattern of the exhaust gas produced by the single-cylinder is very irregular.

Such rather complex systems are not suitable for use on motorcycles, for example.

In order to overcome the problems related to the efficiency of turbochargers, it is also known to use electric motors to drive the compressors that send the supercharging air flow to the engine.

However, these systems are not free of drawbacks and limitations. In particular, the known systems do not optimize energetically the operation of the electric motor that drives the compressor and, above all, do not provide a complete management of the propulsion apparatus that may optimize energetically the apparatus in all the possible operating conditions thereof.

### PRESENTATION OF THE INVENTION

The need is therefore felt to resolve the drawbacks and limitations cited in reference to the known art.

Such requirement is met by a motorcycle according to claim 1, and a regulation method according to any of claims 10-12.

### DESCRIPTION OF THE DRAWINGS

Further features and advantages of the present invention will become more apparent from the following description of the preferred and non-limiting examples of embodiment thereof, wherein:

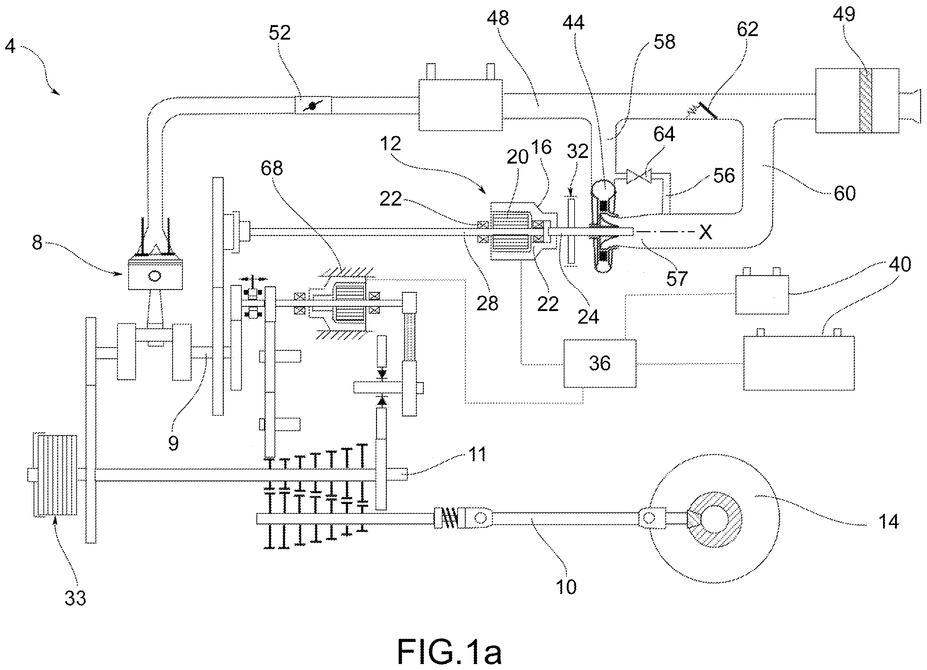

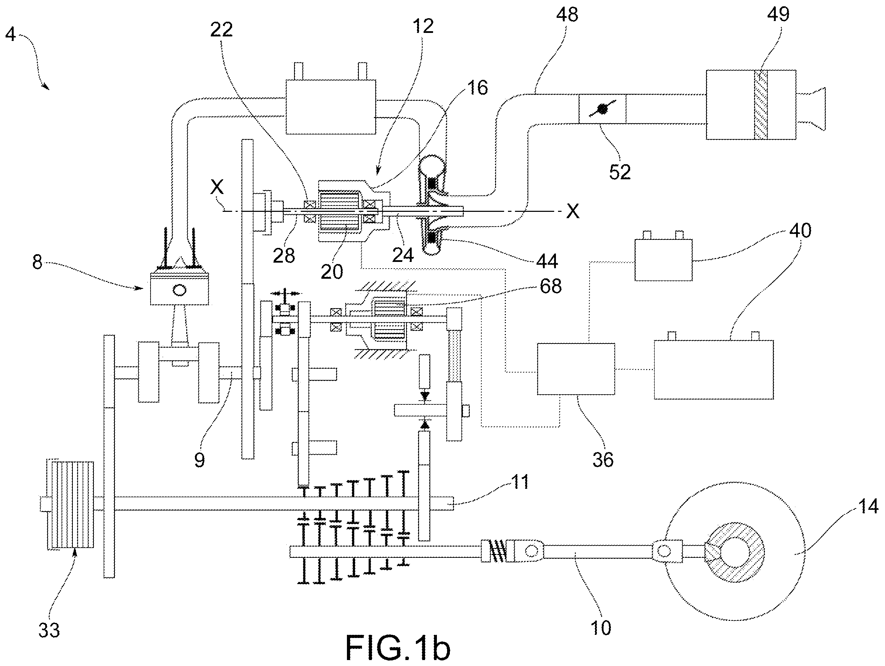

figures 1a-1b represent schematic views of a propulsion apparatus comprising a reversible electric machine according to two possible variant embodiments;

figures 2a,3a,4a,5a,6a,7a represent schematic views of the different operating conditions of the propulsion apparatus in figure 1a, as better specified hereinafter;

figures 2b, 3b, 4b, 5b, 6b, 7b represent schematic views of the different operating conditions of the propulsion apparatus of figure 1b, as better specified hereinafter.

The elements or parts of elements in common between the embodiments described hereinafter will be indicated at the same numerical references.

### DETAILED DESCRIPTION

With reference to the aforesaid figures, an overall schematic view of a hybrid propulsion apparatus comprising an internal combustion engine 8 and a reversible electric machine 12 according to the present invention is collectively indicated at reference number 4.

The internal combustion engine 8 is in turn equipped with a drive shaft 9 and at least one transmission shaft 10, preferably through the interposition of a gearbox 11. The type of gearbox is not relevant to the present invention.

Moreover, for the purposes of the present invention, it must be specified that the propulsion apparatus may be applied to any type of motorcycle, having two, three or more wheels, or even a motor vehicle or industrial vehicle. There are no limitations or exclusions of any kind even in relation to the type, displacement and power of the internal combustion engine.

As mentioned above, the propulsion apparatus is of the hybrid type, since it comprises both an internal combustion engine 8 and a reversible electric machine 12, which may be used both to support the internal combustion engine 8, for example the supercharging thereof, and to provide torque/power in addition to and/or as an alternative to the power of the internal combustion engine, as better specified below.

The reversible electric machine 12 comprises a first and a second electromechanical component 16,20, mechanically separated and mounted rotatably with respect to an axis of rotation (X-X),

For example, said electromechanical components comprise electrical windings and/or permanent magnets.

The electromechanical components 16,20 are configured and controlled to function alternately as stator and rotor: in this way, the reversible electric machine 12 may work alternately as an electric motor and an electric generator, whereby it may absorb electrical energy to deliver mechanical energy, or absorb mechanical energy to deliver electrical energy, respectively, according to the contingent operation of the propulsion apparatus 4.

The electromechanical components 16,20 are coaxial to the axis of rotation X-X and configured so as to be able to rotate against each other and to face each other.

In other words, unlike a traditional electric machine wherein there is provided a fixed stator and a rotating rotor, in the reversible electric machine 12 according to the present invention, both electromechanical components 16,20 are configured to rotate.

For this purpose, both the first electromechanical component 16 and the second electromechanical component 20 are equipped with respective bearings 22; the bearings 22 may be of any type, comprising, for example, ball bearings, roller bearings, needle roller bearings, bushings and the like.

The electromechanical components 16,20 are equipped respectively with first and second mechanical connection means 24,28, so as to be able to receive in or send out mechanical power.

Mechanical connection means 24,28 may be of various types; depending on a possible embodiment, the first and/or second mechanical connection means 24,28 comprise a connection joint that may be engaged and disengaged on command.

Said connection joint may be a friction joint or an electromagnetically actuated joint.

According to a possible embodiment, the first and/or second mechanical connection means 24,28 comprise at least one braking device 32 suitable to slow down and/or selectively block the rotation of the corresponding electromechanical component 16,20 and, in particular, of the first electromechanical component 16, as better described hereinafter.

The braking device 32 may be of various types, comprising, for example, a friction brake such as a band, pad or drum brake, a disc brake and the like.

Preferably, the first mechanical connection means 24 comprise a first shaft and the second mechanical connection means 28 comprise a second shaft, said shafts being coaxial and disconnected from each other.

According to one embodiment, the first electromechanical component 16 is equipped with electrical connection means to be able to receive in and/or send out electrical power, depending on the type of operation of the reversible electric machine as a motor or generator respectively.

Said electrical connection means may comprise at least one inverter 36 and/or at least one DC accumulator device 40.

Since the first electromechanical components 16,20 are able to rotate one relative to the other, the component at a lower rotational speed acts as a stator and the component at a higher speed rotates relative to the other at a speed equal to the difference in rotational speed.

The reversible electric machine 12 is preferably integrated into the propulsion apparatus 4 so that it may be used not only as an electric drive element but also as a supercharging device.

For this purpose, the first electromechanical component 16 is operatively connected, by means of said first mechanical connection means 24, to a compressor 44 fluidly connected to a suction duct 48 of the internal combustion engine 8. Said compressor 44 comprises an impeller mechanically connected to said first mechanical connection means 24.

The connection between the first electromechanical component 16 and the compressor 44 may be direct, i.e. with a 1:1 transmission ratio, or variable transmission ratios may be provided.

The compressor 44 is typically a radial or centrifugal compressor, but it is also possible to envisage an axial compressor; the compressor 44, whether radial or axial, may be of the fixed type or envisage fins (on the impeller or on the distributor) of the movable or variable type, in order to optimize the compression depending on the rotation speed of the impeller.

The suction duct 48 is equipped with a throttle body 52 or any other device adapted to choke the passage opening of the same suction duct; for example, a guillotine valve or the like may also be used for this purpose.

Preferably, an air filter 49 is placed upstream of the suction duct 48, in a known manner.

The compressor 44 may be placed either upstream or downstream of said throttle body 52. As seen, figures 'a' illustrate the solutions wherein the compressor 44 is positioned upstream of the throttle body 52, and the figures 'b' illustrate it downstream. In solutions wherein the compressor 44 is located upstream of the throttle body 52, preferably the suction duct 48 is equipped with a branch 60 that supplies the air to the same compressor 44. The branch 60 is located downstream of the air filter 49. In solutions wherein the compressor 44 is arranged downstream of the throttle body, the branch 60 is not usually provided. Preferably, the branch 60 is equipped with a shut-off valve 62 to allow or block the access of the air from the air filter 49 to the inside the same branch.

According to a possible embodiment, the suction duct 48 is equipped with a bypass duct 56 placed between an inlet 57 and an outlet 58 of the compressor 44, wherein preferably said bypass duct 56 is equipped with a bypass valve 64. Said bypass duct 56 acts as an anti-pumping device for the compressor 44.

It is possible to envisage the bypass duct 56, with relative bypass valve 64, both in solutions equipped with a branch 60 and in solutions without a branch 60.

According to a possible embodiment, the second electromechanical component 20 is operatively connected, by means of the second mechanical connection means 28, to the drive shaft 9 or to the transmission shaft 10 of the internal combustion engine 8.

According to a possible embodiment, the hybrid propulsion apparatus 4 comprises a second electric machine 68, electrically connected to at least one accumulator device 40 and mechanically connectible to the drive shaft 9 and/or the transmission shaft 10. The drive shaft will in turn be kinematically connected to at least one drive wheel 14 of the motorcycle. At least one drive wheel may be fitted to the front or rear axle of the motorcycle. The final transmission type that goes to the wheel or to the drive wheels is not relevant to the present invention.

The second electric machine may be a small electric motor that acts as a starter for the internal combustion engine 8 or an electric motor of greater power also able to drive the vehicle.

The propulsion apparatus 4 described above has many variant embodiments and may be operated in various configurations depending on the contingent operating conditions and/or user requirements.

The following describes the operation of the reversible electric machine and the propulsion apparatus according to the present invention.

In the figures, the arrows indicate the mechanical (continuous line) and electrical (dotted line) potential flows in the various operating configurations described hereinafter.

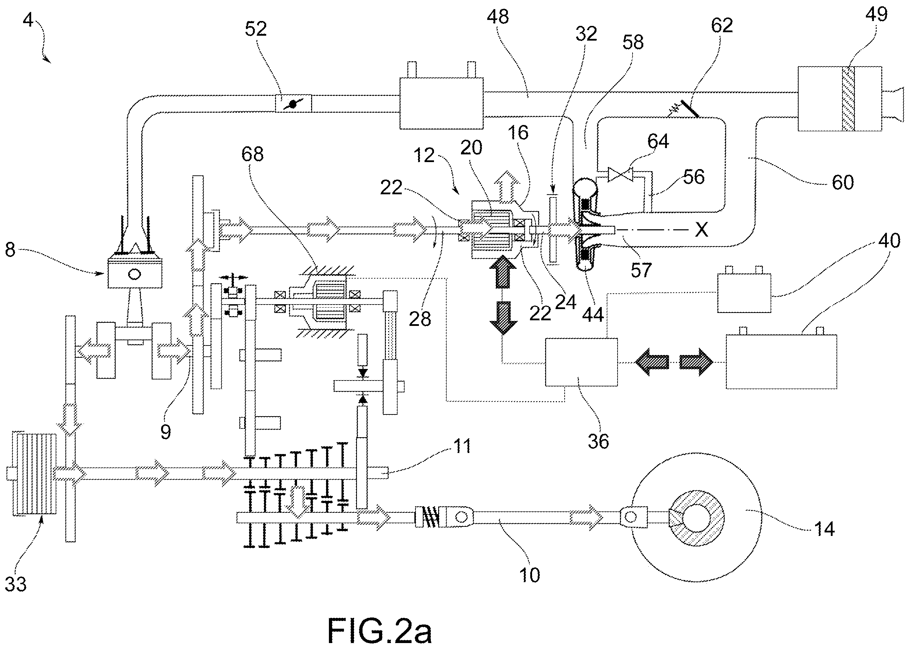

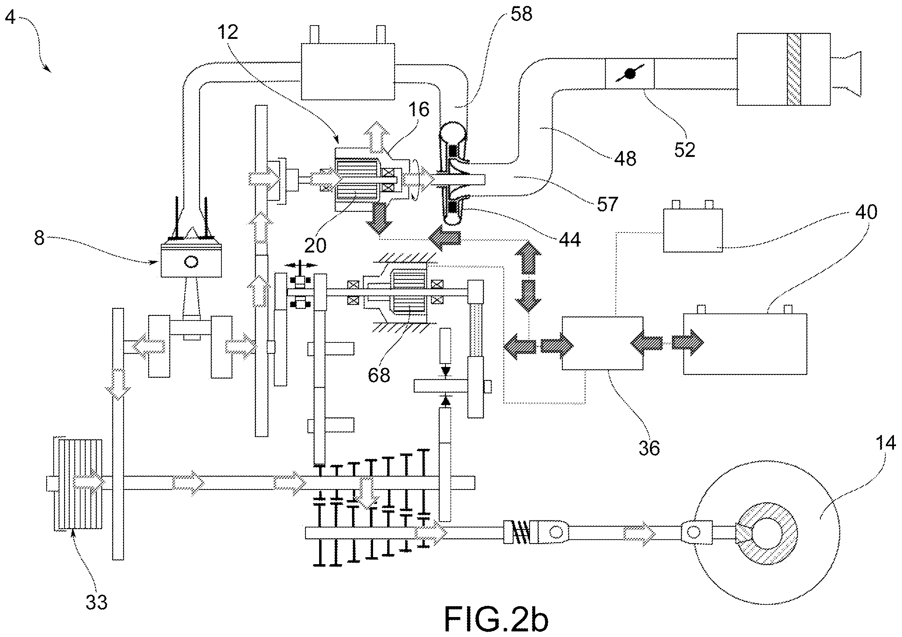

According to a possible mode of operation, the propulsion apparatus 4 operates in pure internal combustion propulsion mode (figures 2a-2b), with or without supercharging.

For example, in the case of pure internal combustion propulsion without supercharging, the regulation method of the hybrid propulsion apparatus comprises the steps of:
blocking the rotation of the compressor 44 by the first mechanical connection means 24, for example, by the braking device 32, driving the rotation of the second electromechanical component 20 by the second mechanical connection means 28, under the thrust of the internal combustion engine 8, whereby the reversible electric machine 12 functions as a generator wherein the first electromechanical component operates as a rotor and the second as a stator,
sending electrical energy via the electrical connection devices, e.g. to the inverter 36 and the accumulator device 40.

In such operation, the reversible electric machine 12 does not activate the compressor 44, the shaft of which is braked; it should be noted that preferably, if the apparatus comprises the branch 60, the shut-off valve 62 is open so that the flow of intake air does not enter the branch 60 and is not braked by the impeller of the compressor 44 which may thus be blocked. If the apparatus 4 does not comprise the branch 60 and thus the suction air flow intercepts the impeller of the compressor 44, it is then possible not to block the impeller but to make it rotate at the speed set by the same suction flow; it is also possible to open the bypass valve 64 so as to preferably bypass the same impeller, limiting the pressure drops of the suction flow.

If the performance requirements make it possible, the reversible electric machine 12 may supply electrical energy to the accumulator device 40, operating in the electric generator mode; therefore, the reversible electric machine 12 may draw part of the mechanical power from the drive shaft 9, transforming it into electrical power. For example, this condition may occur when the accelerator is released or when driving downhill.

For example, in the case of pure internal combustion propulsion with supercharging, the regulation method of the hybrid propulsion apparatus 4 comprises the steps of:
driving in rotation the second electromechanical component 20 by means of the second mechanical connection means 28, under the thrust of the internal combustion engine 8,
allowing the rotation of the first electromechanical component 16 by absorbing electrical power from the accumulator device 40, said first electromechanical component 16 driving the rotation of the compressor 44 by means of the first mechanical connection means 24, so that the second electromechanical component 20 works as the rotating stator of the reversible electrical machine 12 and the first electromechanical component 16 works as the rotor of the reversible electric machine 12, the rotation speed of the second electromechanical component 20 being lower than the rotation speed of the first electromechanical component 16.

Such configuration corresponds to the requirement for more or maximum power from the engine which benefits from the supercharging air flow, which, unlike traditional supercharging systems, is not obtained by the mechanical connection of the impeller to the engine or by exhaust gas recirculation, but by the electric drive of the compressor 44.

In theory, under certain operating and performance conditions, the reversible electric machine 12 could simultaneously supply electrical energy to the accumulator device 40 and drive the compressor 44, thus performing a dual function at the same time: this is made possible by exploiting the relative speed between the two electromechanical components 20,24.

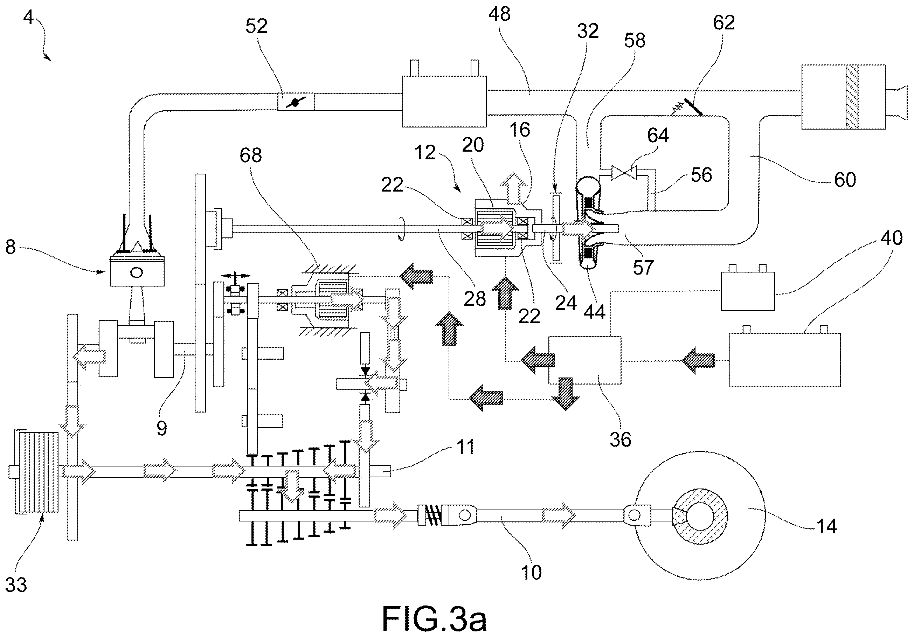

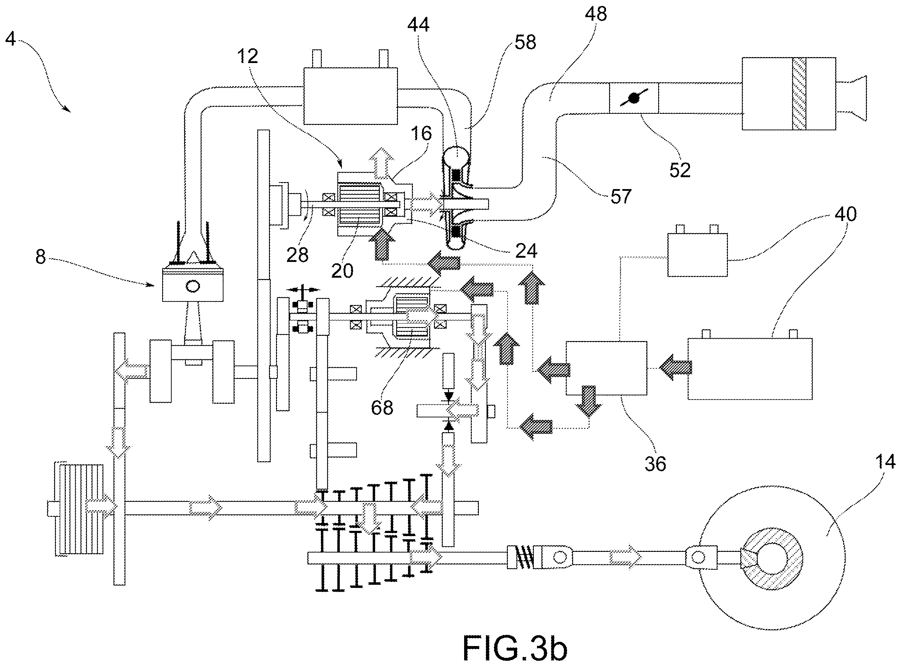

According to a further mode of operation of 'maximum hybrid power' (figures 3a-3b), the reversible electric machine 12 functions as a motor, i.e. it absorbs power from the accumulator device 40 and actuates the compressor 44 so as to supercharge the internal combustion engine 8; optionally, the second electric machine 68 may also enter into action, which, by also absorbing electrical power from the accumulator device, feeds mechanical power onto the transmission shaft 10.

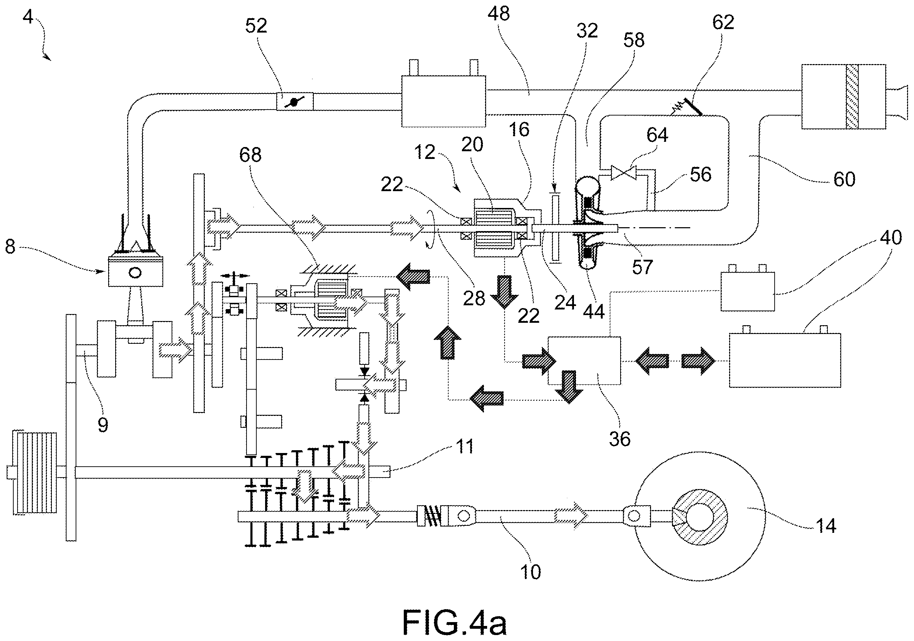

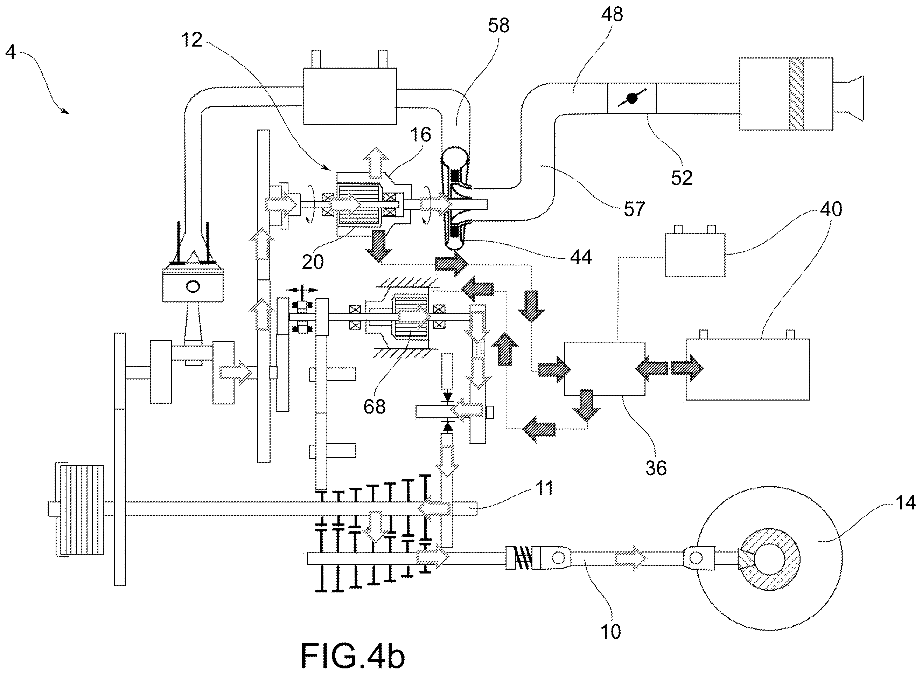

According to another possible mode of operation, for maximum economy (figures 4a-4b), the internal combustion engine 8 operates around a design point, i.e. under conditions of maximum efficiency, and the mechanical power produced is used by the reversible electric machine 12 to produce and store electrical energy in the accumulator device 40. As it is a condition of minimum consumption, the compressor 44 is not actuated and all the mechanical power absorbed by the drive shaft is used by the reversible electric machine 12 to generate electrical power. In this condition, the clutch of the internal combustion engine is also opened.

At the same time, the second electric machine 68 may absorb electrical power from the accumulator device 40 and provide mechanical power on the transmission shaft 10 to ensure operation in energy-saving mode.

According to a further possible operating mode, of the purely electrical type, the regulation method of the hybrid propulsion apparatus 4 comprises the steps of: blocking the rotation of the compressor 44 by means of the first mechanical connection means 24,
driving in rotation the second electromechanical component 20, absorbing electrical power from an accumulator device 40, and providing, via the second mechanical connecting means 28, the mechanical power of the reversible electric machine 12 to the transmission shaft 10 for forward or reverse drive of the vehicle, or for starting the internal combustion engine.

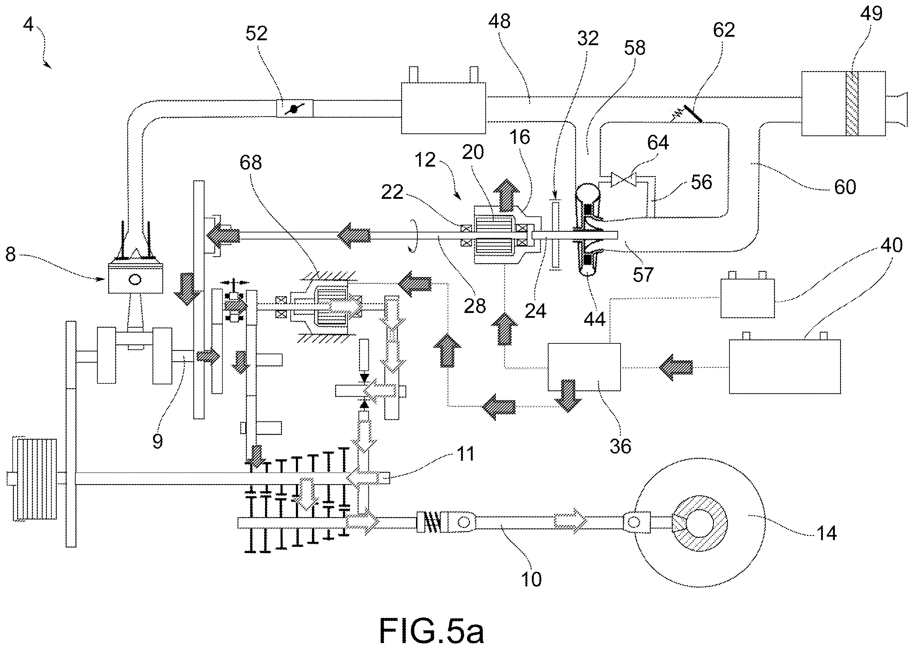

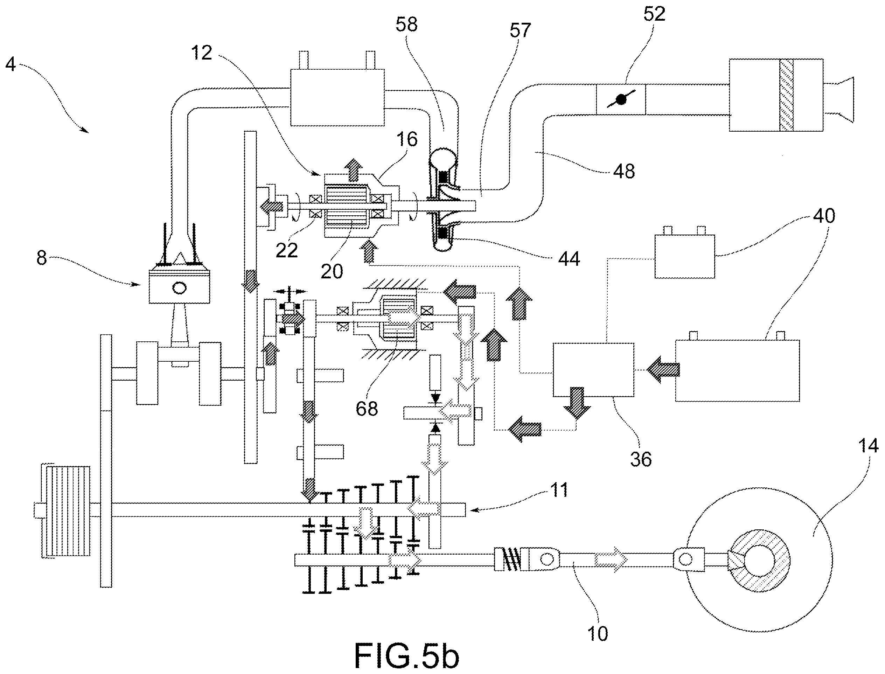

The purely electrical mode may also be obtained with the second electric machine 68 which supplies mechanical power to the transmission shaft 10 (figures 5a-5b), even when the reversible electric machine 12 is in the deactivation condition.

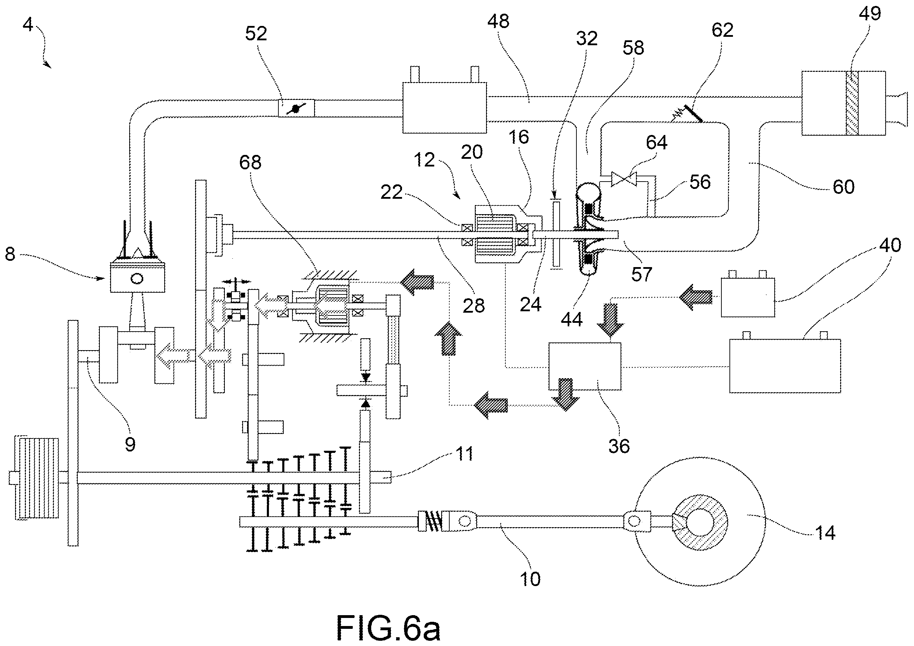

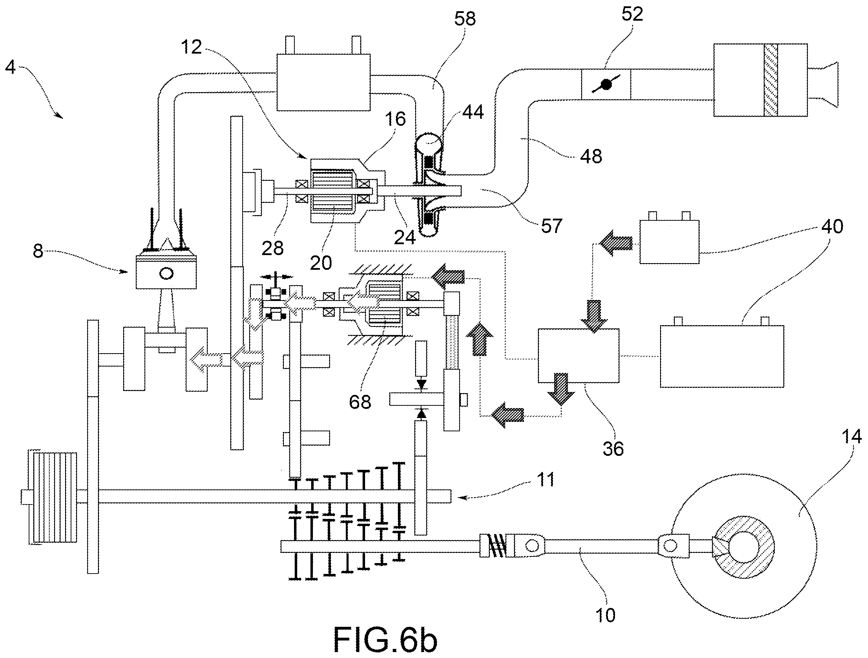

According to a possible embodiment (figure 6a-6b) the second electric machine 68 performs as a starter motor for the internal combustion engine 8, absorbing electrical power from the accumulator device 40 and providing mechanical power to the drive shaft 9. In this case the reversible electric machine 12 may also not be used.

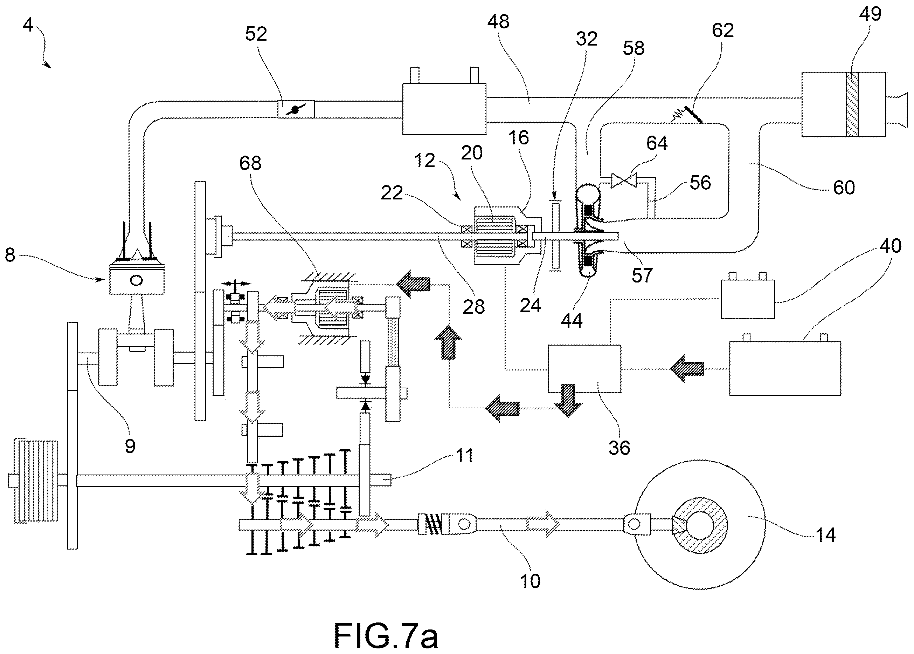

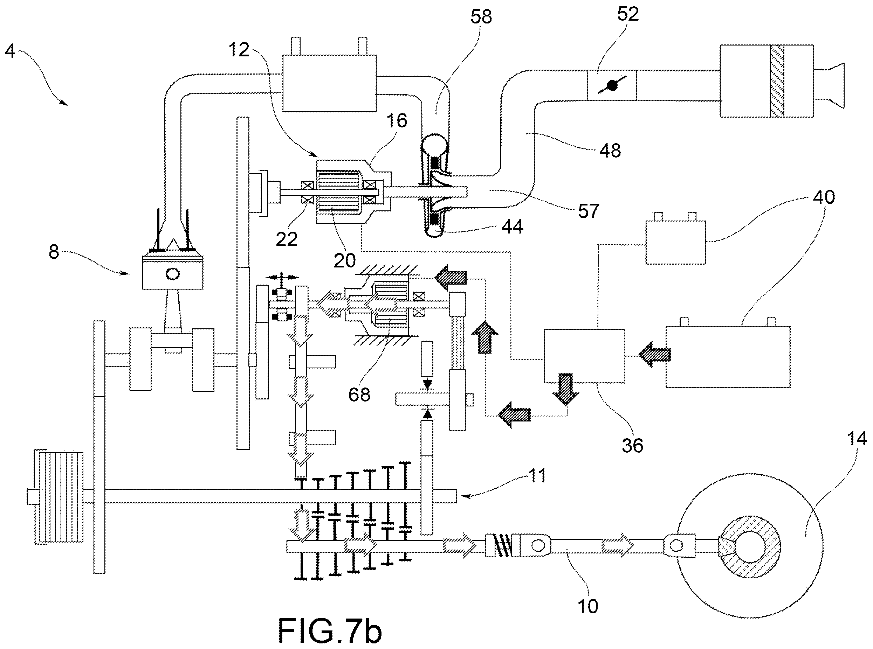

According to a further possible embodiment (figures 7a-7b), the second electric machine 68 carries out the function of reverse drive, taking electrical power from the accumulator device 40 and supplying mechanical power to the transmission shaft 10, wherein the internal combustion engine is switched off or in neutral. In this case the reversible electric machine 12 may also not be used.

As may be appreciated from the foregoing, the present invention allows the drawbacks presented in the prior art to be overcome.

In particular, the present invention allows the implementation of supercharging on motorcycles, with maximum flexibility of use that includes a wide range of operating options, including: purely electrical operation, maximum efficiency in terms of fuel consumption, maximum sportiveness and so on.

Moreover, the present invention allows for an improvement and optimization of fuel consumption in the motorcycle industry without penalizing performance.

It also allows the introduction of electric propulsion in the motorcycle field in order to meet the increasingly stringent limitations in terms of chemical and noise pollution.

In the system of the present invention it is also easy to implement the start-&-stop function that allows the automatic shutdown and restart of the internal combustion engine when stopped.

In general, the present invention illustrates an electric machine and a supercharging system with a plurality of features, all of which may be implemented in a modular way according to the needs of the user, in an extremely flexible manner.

A person skilled in the art, in the object of satisfying contingent and specific requirements, may make numerous modifications and variations to the solutions described above, within the scope of the invention as defined by the following claims.

## Claims

1. Motorcycle comprising a hybrid propulsion apparatus (4) comprising an internal combustion engine (8) and a reversible electric machine (12) being able to operate alternately as an electric motor and as an electric generator, the reversible electric machine comprising:
a first electromechanical component (16) operatively connected by means of first mechanical connection means (24) to a compressor (44) fluidly connected to a suction duct (48) of the internal combustion engine (8), said first electromechanical component (16) being further provided at least with electric windings electrical connection means in order to receive in input and deliver in output electric power,
a second electromechanical component (20), operatively connected by means of second mechanical connection means (28) to a drive shaft (9) or to a transmission shaft (10) of the internal combustion engine (8),
said second electromechanical component (20) being further provided with electric windings and/or permanent magnets;said first and second electromechanical components (16,20) being configured to rotate relative to each other, at different angular speeds, around a common axis of rotation (X-X);
wherein said electromechanical components (16,20) are configured and controlled to function alternately as stator and rotor,
wherein the electromechanical components (16,20) are able to rotate one relative to the other,
the component at a lower rotational speed acts as a stator and
the component at a higher speed rotates relative to the other at a speed equal to the difference in rotational speed.

2. Motorcycle according to claim 1, wherein said first mechanical connection means (24) comprises a connection joint which may be engaged/disengaged on command.

3. Motorcycle according to claim 2, wherein said connection joint is a friction joint or an electromagnetically actuated joint.

4. Motorcycle according to any one of the preceding claims, wherein said first mechanical connection means (24) comprises at least one braking device (32) suitable for braking and/or selectively blocking the rotation of the first electromechanical component (16).

5. Motorcycle according to any one of the preceding claims, wherein said electrical connection means comprise at least one inverter (36) and/or at least one DC accumulator device (40).

6. Motorcycle according to any one of previous claims, wherein the suction duct (48) is provided with a throttle body (52) and wherein the compressor (44) is arranged upstream or downstream of said throttle body (52).

7. Motorcycle according to any one of previous claims, wherein the suction duct (48) is provided with a bypass duct (56) arranged between an inlet (57) and an outlet (58) of the compressor (44), preferably said bypass duct (56) is provided with a bypass valve (64).

8. Motorcycle according to any one of previous claims, comprising a second electric machine (68), electrically connected to at least one accumulator device (40) and mechanically connectible to the drive shaft (9) and/or to the transmission shaft (10).

9. Motorcycle according to any one of previous claims, wherein the first mechanical connection means (24) comprises a first shaft and the second mechanical connection means (28) comprise a second shaft, said shafts being disconnected from each other.

10. Regulation method of a hybrid propulsion apparatus (4) of a motorcycle according to any one of the claims from 1 to 9, comprising the steps of:
- blocking the rotation of the compressor (44) by means of the first mechanical connection means (24);
- driving in rotation the second electromechanical component (20) by means of the second mechanical connection means (28), under the thrust of the internal combustion engine (8);
- the reversible electric machine (12) working as a generator and supplying electric energy through the electrical connection means.

11. Regulation method of a hybrid propulsion apparatus (4) of a motorcycle according to any one of the claims from 1 to 9, comprising the steps of:
- driving in rotation the second electromechanical component (20) by means of the second mechanical connection means (28), under the thrust of the internal combustion engine (8);
- allowing the rotation of the first electromechanical component (16), absorbing electrical power from an accumulator device (40), said first electromechanical component (16) driving in rotation the compressor (44) through the first mechanical connection means (24),
- whereby, the second electromechanical component (20) works as a rotating stator of the reversible electric machine (12) and the first electromechanical component (16) works as a rotor of the reversible electric machine (12), being the rotation speed of the second electromechanical component (20) less than the rotation speed of the first electromechanical component (16).

12. Regulation method of a hybrid propulsion apparatus (4) of a motorcycle according to any one of the claims from 1 to 9, comprising the steps of:
- blocking the rotation of the compressor (44) by the first mechanical connection means (24),
- driving in rotation the second electromechanical component (20) absorbing electrical power from an accumulator device (40), and providing, via the second mechanical connection means (28), the mechanical power of the reversible electric machine (12) to the transmission shaft (10) for the forward or rearward drive of the vehicle.

13. Regulation method of a hybrid propulsion apparatus (4) of a motorcycle, according to any one of claims 10 to 12, wherein the second electric machine (68) provides mechanical power to the transmission shaft (10) or performs as a starter motor for the internal combustion engine (8), absorbing electrical power from the accumulator device (40) and providing mechanical power to the drive shaft (9).

14. Regulation method of a hybrid propulsion apparatus (4) of a motorcycle according to claim 13, wherein the second electric machine (68) performs the reverse drive function, absorbing electrical power from the accumulator device (40) and providing mechanical power to the transmission shaft (10), wherein the internal combustion engine (8) is off or in neutral.

## Patentansprüche

1. Motorrad, umfassend eine Hybridantriebsvorrichtung (4), die einen Verbrennungsmotor (8) und eine umsteuerbare elektrische Maschine (12) umfasst, die in der Lage ist, abwechselnd als Elektromotor und als elektrischer Generator zu arbeiten, wobei die umsteuerbare elektrische Maschine umfasst:
eine erste elektromechanische Komponente (16), die mittels erster mechanischer Verbindungsmittel (24) operativ mit einem Kompressor (44) verbunden ist, der in Fluidverbindung mit einer Ansaugleitung (48) des Verbrennungsmotors (8) steht, wobei die erste elektromechanische Komponente (16) ferner mindestens mit elektrischen Wicklungen elektrischen Verbindungsmitteln versehen ist, um elektrische Energie zu empfangen und abzugeben,
eine zweite elektromechanische Komponente (20), die mittels zweiter mechanischer Verbindungsmittel (28) operativ mit einer Antriebswelle (9) oder mit einer Getriebewelle (10) des Verbrennungsmotors (8) verbunden ist,
wobei die zweite elektromechanische Komponente (20) ferner mit elektrischen Wicklungen und/oder Permanentmagneten versehen ist; wobei die erste und die zweite elektromechanische Komponente (16, 20) dazu konfiguriert sind, zueinander mit unterschiedlichen Winkelgeschwindigkeiten um eine gemeinsame Drehachse (X-X) zu drehen; wobei die elektromechanischen Komponenten (16, 20) dazu konfiguriert sind und gesteuert sind, abwechselnd als Stator und Rotor zu arbeiten, wobei die elektromechanischen Komponenten (16, 20) in der Lage sind, zueinander zu rotieren,
wobei die Komponente mit der niedrigeren Drehgeschwindigkeit als Stator wirkt und
die Komponente mit der höheren Geschwindigkeit in Bezug auf die andere mit einer Geschwindigkeit dreht, die der Differenz der Drehgeschwindigkeiten gleich ist.

2. Motorrad nach Anspruch 1, wobei die ersten mechanischen Verbindungsmittel (24) eine Verbindungskupplung umfassen, die auf Befehl in Eingriff/außer Eingriff gebracht werden kann.

3. Motorrad nach Anspruch 2, wobei die Verbindungskupplung eine Reibkupplung oder eine elektromagnetisch betätigte Kupplung ist.

4. Motorrad nach einem der vorhergehenden Ansprüche, wobei die ersten mechanischen Verbindungsmittel (24) mindestens eine Bremsvorrichtung (32) umfassen, die geeignet ist, die Drehung der ersten elektromechanischen Komponente (16) zu bremsen und/oder selektiv zu blockieren.

5. Motorrad nach einem der vorhergehenden Ansprüche, wobei die elektrischen Verbindungsmittel mindestens einen Umrichter (36) und/oder mindestens einen Gleichstrom-Akkumulator (40) umfassen.

6. Motorrad nach einem der vorhergehenden Ansprüche, wobei die Ansaugleitung (48) mit einem Drosselventilkörper (52) versehen ist und wobei der Kompressor (44) stromaufwärts oder stromabwärts dem Drosselventilkörper (52) angeordnet ist.

7. Motorrad nach einem der vorhergehenden Ansprüche, wobei die Ansaugleitung (48) mit einer Bypass-Leitung (56) versehen ist, die zwischen einem Einlass (57) und einem Auslass (58) des Kompressors (44) angeordnet ist, wobei die Bypass-Leitung (56) vorzugsweise mit einem Bypass-Ventil (64) versehen ist.

8. Motorrad nach einem der vorhergehenden Ansprüche, umfassend eine zweite elektrische Maschine, die elektrisch mit mindestens einem Akkumulator (68) verbunden ist und die mechanisch mit der Antriebswelle (9) und/oder der Getriebewelle (10) verbunden werden kann.

9. Motorrad nach einem der vorhergehenden Ansprüche, wobei die ersten mechanischen Verbindungsmittel (24) eine erste Welle und die zweiten mechanischen Verbindungsmittel (28) eine zweite Welle umfassen, wobei die Wellen voneinander getrennt sind.

10. Regelverfahren für eine Hybridantriebsvorrichtung (4) eines Motorrads nach einem der Ansprüche 1 bis 9, umfassend die folgenden Schritte:
- Blockieren der Drehung des Kompressors (44) mittels der ersten mechanischen Verbindungsmittel (24);
- Antreiben nach Drehprinzip der zweiten elektromechanischen Komponente (20) mittels der zweiten mechanischen Verbindungsmittel (28) unter dem Schub des Verbrennungsmotors (8);
- wobei die umsteuerbare elektrische Maschine (12) als Generator arbeitet und elektrische Energie über die elektrischen Verbindungsmittel versorgt.

11. Regelverfahren für eine Hybridantriebsvorrichtung (4) eines Motorrads nach einem der Ansprüche 1 bis 9, umfassend die folgenden Schritte:
- Antreiben nach Drehprinzip der zweiten elektromechanischen Komponente (20) mittels der zweiten mechanischen Verbindungsmittel (28) unter dem Schub des Verbrennungsmotors (8);
Ermöglichen der Drehung der ersten elektromechanischen Komponente (16), Aufnehmen der elektrischen Energie aus einem Akkumulator (40), wobei die erste elektromechanische Komponente (16) den Kompressor (44) mittels der ersten mechanischen Verbindungsmittel (24) nach Drehprinzip antreibt,
- wobei die zweite elektromechanische Komponente (20) als drehbarer Stator der umsteuerbaren elektrischen Maschine (12) arbeitet und die erste elektromechanische Komponente (16) als Rotor der umsteuerbaren elektrischen Maschine (12) arbeitet, wobei die Drehgeschwindigkeit der zweiten elektromechanischen Komponente (20) geringer als die Drehgeschwindigkeit der ersten elektromechanischen Komponente (16) ist.

12. Regelverfahren für eine Hybridantriebsvorrichtung (4) eines Motorrads nach einem der Ansprüche 1 bis 9, umfassend die folgenden Schritte:
- Blockieren der Drehung des Kompressors (44) mittels der ersten mechanischen Verbindungsmittel (24),
- Antreiben nach Drehprinzip der zweiten elektromechanischen Komponente (20), Aufnehmen elektrischer Energie aus einem Akkumulator (40) und Bereitstellen der mechanischen Leistung der umsteuerbaren elektrischen Maschine (12) über die zweiten mechanischen Verbindungsmittel (28) an die Getriebewelle (10) für den Vorwärts- oder Rückwärtsantrieb des Fahrzeugs.

13. Regelverfahren für eine Hybridantriebsvorrichtung (4) eines Motorrads nach einem der Ansprüche 10 bis 12, wobei die zweite elektrische Maschine (68) mechanische Leistung an die Getriebewelle (10) liefert oder als Starter für den Verbrennungsmotor (8) arbeitet, indem sie elektrische Energie aus dem Akkumulator (40) aufnimmt und mechanische Leistung an die Antriebswelle (9) liefert.

14. Regelverfahren für eine Hybridantriebsvorrichtung (4) eines Motorrads nach Anspruch 13, wobei die zweite elektrische Maschine (68) die Rückwärtsgangsfunktion ausführt, indem sie elektrische Energie aus dem Akkumulator (40) aufnimmt und mechanische Leistung an die Getriebewelle (10) liefert, wobei der Verbrennungsmotor (8) ausgeschaltet ist oder sich im Leerlauf befindet.

## Revendications

1. Motocyclette comprenant un appareil de propulsion hybride (4) comprenant un moteur à combustion interne (8) et une machine électrique réversible (12) apte à fonctionner alternativement comme moteur électrique et comme générateur électrique, la machine électrique réversible comprenant :
un premier composant électromécanique (16) connecté de manière opérationnelle au moyen de premiers moyens de liaison mécanique (24) à un compresseur (44) relié fluidiquement à un conduit d'admission (48) du moteur à combustion interne (8), ledit premier composant électromécanique (16) étant en outre pourvu au moins d'enroulements électriques et de moyens de connexion électrique afin de recevoir en entrée et de délivrer en sortie de l'énergie électrique,
un second composant électromécanique (20), connecté de manière opérationnelle au moyen de seconds moyens de liaison mécanique (28) à un arbre moteur (9) ou à un arbre de transmission (10) du moteur à combustion interne (8),
ledit second composant électromécanique (20) étant pourvu d'enroulements électriques et/ou d'aimants permanents ; lesdits premier et second composants électromécaniques (16, 20) étant configurés pour tourner l'un par rapport à l'autre, à des vitesses angulaires différentes, autour d'un axe de rotation commun (X-X) ;
lesdits composants électromécaniques (16, 20) étant configurés et contrôlés pour fonctionner alternativement comme stator et rotor,
les composants électromécaniques (16, 20) étant aptes à tourner l'un par rapport à l'autre,
le composant ayant une vitesse de rotation plus faible agissant comme stator et
le composant ayant une vitesse plus élevée tournant par rapport à l'autre à une vitesse égale à la différence de vitesse de rotation.

2. Motocyclette selon la revendication 1, dans laquelle lesdits premiers moyens de liaison mécanique (24) comprennent un joint de connexion pouvant être engagé/désengagé sur commande.

3. Motocyclette selon la revendication 2, dans laquelle ledit joint de connexion est un joint à friction ou un joint actionné électromagnétiquement.

4. Motocyclette selon l'une quelconque des revendications précédentes, dans laquelle lesdits premiers moyens de liaison mécanique (24) comprennent au moins un dispositif de freinage (32) apte à freiner et/ou à bloquer sélectivement la rotation du premier composant électromécanique (16).

5. Motocyclette selon l'une quelconque des revendications précédentes, dans laquelle lesdits moyens de connexion électrique comprennent au moins un onduleur (36) et/ou au moins un dispositif accumulateur CC (40).

6. Motocyclette selon l'une quelconque des revendications précédentes, dans laquelle le conduit d'admission (48) est pourvu d'un corps de papillon (52) et dans laquelle le compresseur (44) est disposé en amont ou en aval dudit corps de papillon (52).

7. Motocyclette selon l'une quelconque des revendications précédentes, dans laquelle le conduit d'admission (48) est pourvu d'un conduit de dérivation (56) disposé entre une entrée (57) et une sortie (58) du compresseur (44), de préférence ledit conduit de dérivation (56) étant pourvu d'une valve de dérivation (64).

8. Motocyclette selon l'une quelconque des revendications précédentes, comprenant une seconde machine électrique (68) connectée électriquement à au moins, au dispositif accumulateur (40) et mécaniquement connectable à l'arbre moteur (9) et/ou à l'arbre de transmission (10).

9. Motocyclette selon l'une quelconque des revendications précédentes, dans laquelle les premiers moyens de liaison mécanique (24) comprennent un premier arbre et les seconds moyens de liaison mécanique (28) comprennent un second arbre, lesdits arbres étant déconnectés l'un de l'autre.

10. Procédé de régulation d'un appareil de propulsion hybride (4) d'une motocyclette selon l'une quelconque des revendications 1 à 9, comprenant les étapes consistant à :
- bloquer la rotation du compresseur (44) au moyen des premiers moyens de liaison mécanique (24) ;
- entraîner en rotation le second composant électromécanique (20) au moyen des seconds moyens de liaison mécanique (28), sous l'action du moteur à combustion interne (8) ;
- la machine électrique réversible (12) fonctionnant comme générateur et fournissant de l'énergie électrique par l'intermédiaire des moyens de connexion électrique.

11. Procédé de régulation d'un appareil de propulsion hybride (4) d'une motocyclette selon l'une quelconque des revendications 1 à 9, comprenant les étapes consistant à :
- entraîner en rotation le second composant électromécanique (20) au moyen des seconds moyens de liaison mécanique (28), sous l'action du moteur à combustion interne (8) ;
permettre la rotation du premier composant électromécanique (16), absorbant de l'énergie électrique provenant d'un dispositif accumulateur (40), ledit premier composant électromécanique (16) entraînant en rotation le compresseur (44) par l'intermédiaire des premiers moyens de liaison mécanique (24),
- de telle sorte que le second composant électromécanique (20) fonctionne comme stator rotatif de la machine électrique réversible (12) et que le premier composant électromécanique (16) fonctionne comme rotor de la machine électrique réversible (12), la vitesse de rotation du second composant électromécanique (20) étant inférieure à la vitesse de rotation du premier composant électromécanique (16).

12. Procédé de régulation d'un appareil de propulsion hybride (4) d'une motocyclette selon l'une quelconque des revendications 1 à 9, comprenant les étapes consistant à :
- bloquer la rotation du compresseur (44) par les premiers moyens de liaison mécanique (24),
- entraîner en rotation le second composant électromécanique (20) en absorbant de l'énergie électrique provenant d'un dispositif accumulateur (40), et fournir, via les seconds moyens de liaison mécanique (28), la puissance mécanique de la machine électrique réversible (12) à l'arbre de transmission (10) pour la marche avant ou arrière du véhicule.

13. Procédé de régulation d'un appareil de propulsion hybride (4) d'une motocyclette selon l'une quelconque des revendications 10 à 12, dans lequel la seconde machine électrique (68) fournit une puissance mécanique à l'arbre de transmission (10) ou fonctionne comme démarreur du moteur à combustion interne (8), en absorbant de l'énergie électrique provenant du dispositif accumulateur (40) et en fournissant une puissance mécanique à l'arbre moteur (9).

14. Procédé de régulation d'un appareil de propulsion hybride (4) d'une motocyclette selon la revendication 13, dans lequel la seconde machine électrique (68) réalise la fonction de marche arrière, en absorbant de l'énergie électrique provenant du dispositif accumulateur (40) et fournissant une puissance mécanique à l'arbre de transmission (10), le moteur à combustion interne (8) étant arrêté ou au point mort.
